## Europäisches Patentamt

(19) **European Patent Office**

**Office européen des brevets**

(11) Veröffentlichungsnummer: **0 252 421**
**B1**

(12) # EUROPÄISCHE PATENTSCHRIFT

(45) Veröffentlichungstag der Patentschrift:
26.09.90

(51) Int. Cl.⁵: **B67D 3/00**, G01F 11/32

(21) Anmeldenummer: **87109456.1**

(22) Anmeldetag: **01.07.87**

(54) **Dosierkammer-Ausgabeeinrichtung für Flüssigkeiten.**

(30) Priorität: **07.07.86 DE 3622745**

(43) Veröffentlichungstag der Anmeldung:
**13.01.88 Patentblatt 88/2**

(45) Bekanntmachung des Hinweises auf die Patenterteilung:
**26.09.90 Patentblatt 90/39**

(84) Benannte Vertragsstaaten:
**AT BE CH DE ES FR GB GR IT LI LU NL SE**

(56) Entgegenhaltungen:
EP-A- 0 170 766
DE-B- 1 632 027
FR-A- 2 208 625
FR-A- 2 489 785
GB-A- 1 577 909
US-A- 2 759 641
US-A- 3 515 312

(73) Patentinhaber: **Bosch-Siemens Hausgeräte GmbH,
Hochstrasse 17, D-8000 München 80(DE)**
Patentinhaber: **Coca-Cola Company, P.O.Drawer 1734,
Atlanta Georgia 30301(US)**

(72) Erfinder: **Färber, Karlheinz, Dipl.-Ing., Giegerweg 1,
D-7928 Giengen/Brenz(DE)**
Erfinder: **Deininger, Anton, Dipl.-Ing., Vogtstrasse 20,
D-8887 Bachhagel(DE)**
Erfinder: **Preuss, Rolf, Dipl.-Ing., Bergstrasse 56,
D-2418 Ratzeburg(DE)**
Erfinder: **Plester, Georg Dipl.-Ing., Rheinstrasse 79,
D-4300 Essen 18(DE)**

(74) Vertreter: **Kessl, Josef et al, c/o Bosch-Siemens
Hausgeräte GMBH Patent-und Vertragswesen
Hochstrasse 17, D-8000 München 80(DE)**

## Beschreibung

Die vorliegende Erfindung bezieht sich auf eine Dosierkammer-Ausgabeeinrichtung zur dosierten Abgabe von Flüssigkeiten, insbesondere von Getränkekonzentraten, aus einem Vorratsbehälter unter Verwendung eines an der Austrittsöffnung des Vorratsbehälters lösbar befestigten Dosierventils mit einer dessen Zuflußöffnung und Austrittsöffnung alternierend verschließenden bzw. öffnenden Steuerschieberanordnung, die aus einer ersten Lage, bei der die Austrittsöffnung verschlossen ist, in eine zweite Lage, bei der die Zuflußöffnung verschlossen ist, verstellbar ist, wobei die eingangsseitige Durchflußöffnung in die Dosierkammer-Ausgabeeinrichtung zentral im Kopfbereich dieser Dosierkammer-Ausgabeeinrichtung angeordnet ist und gegenüber dieser Zuflußöffnung direkt auf dem rohrförmig ausgebildeten Steuerschieber ein Ventilverschlußorgan angeordnet ist, über das die Zuflußöffnung in Bewegungsrichtung des Steuerschiebers gegenüber dem gesamten Innenraum des Dosierkammergehäuses deckelartig verschließbar ist und auf dem Steuerschieber oberhalb des Ventilverschlußorgans in die eingangsseitige Durchflußöffnung der Dosierkammer-Ausgabeeinrichtung hineinragende Führungsrippen angeordnet sind.

Derartige Anordnungen kommen beispielsweise und bevorzugt zur Anwendung in Getränkeautomaten, mittels denen karbonisiertes Wasser mit Getränkekonzentraten zu einem Erfrischungsgetränk vermischt werden. Vorratsbehälter für die Getränkekonzentrate sind üblicherweise aus formstabilem und gasundurchlässigem Material gefertigt und haben die Form einer Flasche oder aber eines Quaders. Diese Vorratsbehälter sind beim Einsatz in einem Getränkeautomaten mit der Ausgabeöffnung nach unten gerichtet angeordnet. An diese Ausgabeöffnung ist eine Dosierkammer-Ausgabeeinrichtung mit eingangsseitigem und ausgangsseitigem alternierend durch einen Steuerschieber verschließbaren Durchflußöffnungen befestigt. Die Flüssigkeit (Getränkekonzentrat) strömt durch Schwerkraft aus dem Vorratsbehälter in die Dosierkammer-Ausgabeeinrichtung, wenn deren eingangsseitige Durchflußöffnung geöffnet ist. Wird diese eingangsseitige Durchflußöffnung durch den Steuerschieber verschlossen und gleichzeitig die ausgangsseitige Durchflußöffnung geöffnet, so fließt ebenfalls durch Schwerkraft – die Flüssigkeit aus diesem Dosiersystem heraus, wobei die Flüssigkeitsmenge durch den Dosierkammer-Inhalt im wesentlichen bestimmt ist.

Bei bekannten Dosierkammer-Ausgabeeinrichtungen (EP-A 0 170 766) wirken sich jedoch Leckströme, welche zwischen dem Steuerschieber und dem Dosierkammergehäuse möglich sind, schwer kontrollierbar auf die ausgegebene Menge aus. Eine möglichst spaltfreie Ausgestaltung der Führung zwischen dem Steuerschieber und dem Dosierkammergehäuse zur Vermeidung dieser Leckströme ist deshalb äußerst problematisch, da dieser Steuerschieber möglichst leichtgängig im Dosierkammergehäuse axial verschiebbar sein soll, um in Form eines Tauchankers durch ein elektrisch erzeugtes Magnetfeld sicher verstellt werden zu können. Diese Verstellmethode erfordert keine mechanischen Kopplungen, so daß ein Austausch der Dosierkammer-Ausgabeeinrichtungen im Getränkeautomaten zusammen mit den Vorratsbehältern sehr leicht möglich ist.

Es ist möglich, den Kopfraum des Vorratsbehälters oder einen Pufferraum innerhalb dieses Vorratsbehälters zu belüften (DE-OS 2 544 671), um zu erreichen, daß der Flüssigkeitsfluß nicht durch Volumen ausgleichende Luftgegenströmungen und durch sich ausbildenden Unterdruck im Vorratsbehälter behindert wird. Diese Maßnahmen erfordern einen zusätzlichen Aufwand, sie haben sich aber als nicht vorteilhaft erwiesen, da aus der Dosierkammer-Ausgabevorrichtung beim Nachfließen der Flüssigkeit die dort befindliche Luft ohnehin in den Kopfraum des Vorratsbehälters entweicht. Bei den bekannten Systemen hat es sich sogar als zweckmäßig herausgestellt, daß sich im Kopfraum des Vorratsbehälters ein Unterdruck aufbaut, welcher den Leckströmungen zwischen dem Dosierkolben und der Wandung des Dosierkammergehäuses entgegenwirkt. Der Druck innerhalb formstabiler Vorratsbehälter ist aber von äußeren Einflüssen, so insbesondere vom Temperaturgang bei intermittierender Kühlung, abhängig.

Es ist auch eine Flüssigkeits-Ausgabevorrichtung bekannt geworden (US-A 3 515 312), bei der ein mechanisch betätigbarer Steuerschieber alternierend eine Zuflußöffnung und eine Auslaßöffnung einer daneben angeordneten, über ein Belüftungsrohr belüfteten Dosierkammer öffnet und schließt. Bei abgesenktem Steuerschieber wird die Dosierkammer aus einem darüber angeordneten Vorratsbehälter mit Flüssigkeit gefüllt, wobei die Luft über das Belüftungsrohr entweicht, während bei angehobenem Steuerschieber die Flüssigkeit nach unten austritt und über das Belüftungsrohr wiederum Luft einströmt.

Die Aufgabe der vorliegenden Erfindung liegt nunmehr darin, eine Dosierkammer-Ausgabeeinheit bereitzustellen, durch welche genaue, von Umwelteinflüssen unabhängige und für den Inhalt des jeweils zugeordneten Vorratsbehälters spezifische Dosierungen der Ausgabevolumen ermöglicht sind. Dabei soll die Ausgabeeinrichtung sowohl einfach bedienbar mit Vorratsbehältern unterschiedlichen Inhalts, als auch mit den gehäusefesten Betätigungseinrichtungen funktionell koppelbar und von diesen lösbar sein. Diese hohen Dosiergenauigkeiten werden z.B. bei Getränkeautomaten für die Getränkekomponenten gefordert, um reproduzierbare Mischungsverhältnisse sicher zu stellen.

Eine Anordnung, die diesen Forderungen gerecht wird, ist erfindungsgemäß dadurch gekennzeichnet, daß der Steuerschieber mit einem ferromagnetischen Anker ausgestattet und somit durch ein durch einen Elektromagneten erzeugtes Magnetfeld entgegen der Schwerkraft betätigbar ist, und daß die eingangsseitige Zuflußöffnung in einer mit dem Gehäuse der Dosierkammer-Ausgabevorrichtung lösbar verbundenen Gehäusekappe mit ein Innenvolumen umgrenzenden Seitenwandungen liegt. Bei Anwendung dieser Maßnahme ist es unter den aufgabengemäßen Bedingungen praktisch sichergestellt, daß Flüssigkeit aus dem Vorratsbehälter nicht über unkontrollierbare Leckströme nachfließt. Der Druck innerhalb des Vorratsbehälters wirkt sich auf die Ausgabemenge der Flüssigkeit damit überhaupt nicht mehr aus. Die ausgegebene Flüssigkeit ist nur noch abhängig vom tatsächlichen durch das Dosierkammergehäuse definierte Volumen festgelegt.

Häufig ist es erforderlich oder auch nur zweckmäßig, Getränkekonzentratbehälter innerhalb eines Getränkeautomaten zu kühlen. Die Kühlphasen erfolgen üblicherweise intermittierend. Meßtechnisch und kühltechnisch bedingt verändert sich während der intermittierenden Kühlphasen die Temperatur innerhalb des Vorratsbehälters. Dadurch können Druckschwankungen in formstabil ausgestalteten Vorratsbehältern hervorgerufen werden. Durch die Verwendung von flexiblen Foliensäcken für die Aufnahme der dosiert auszugebenden Flüssigkeiten ist ein Volumenausgleich gegeben, der wesentliche Veränderungen des Innendrucks im Vorratsbehälter verhindert. Die besondere Ausgestaltung der Dosierkammer-Ausgabeeinrichtung mit der zentral im Kopfbereich angeordneten und deckelartig durch die Ventilverschlußscheibe des Steuerschiebers verschließbaren eingangsseitigen Durchflußöffnung sorgt aber außerdem und zusätzlich dafür, daß sich die Druckunterschiede innerhalb des Vorratsbehälters nicht auf die Dosiermengen auswirken. Durch die auf der Ventilverschlußscheibe in die eingangsseitige Durchflußöffnung dieser Dosierkammer-Ausgabeeinrichtung hineinragenden Führungsrippen wird die Führungsbahn für den Steuerschieber bis in die eingangsseitige Durchflußöffnung der Dosierkammer-Ausgabeeinrichtung axial verlängert.

Es ist anzustreben, daß die wesentlichen Teile der Dosierkammer-Ausgabeeinrichtung einheitlich gestaltet sind und daß der Arbeitshub des Steuerschiebers ebenfalls einheitlich gleich gewählt ist. Diese Maßnahme ist von großer Bedeutung für den Einsatz in Getränkeautomaten, bei welchem ein durch ein Elektromagnetsystem im Gerätegehäuse erzeugter Magnetfluß den als Tauchanker betätigbaren Steuerschieber steuert. Durch gleichartige Ausgestaltung der Teile und gleiche Arbeitshübe kann auch der zu erzeugende Magnetfluß standartisiert sein. Dessen ungeachtet muß aber die Möglichkeit gegeben sein, unterschiedliche Mengen von Flüssigkeiten zu dosieren. Dieses Erfordernis ergibt sich aus den unterschiedlichen Beschaffenheiten der zu dosierenden Flüssigkeiten, nämlich den unterschiedlichen Getränkekonzentraten. In Abhängigkeit von der jeweiligen Art der verwendeten Getränkekonzentrate sind unterschiedliche Mischungsverhältnisse mit der weiteren Komponente, nämlich dem karbonisierten Wasser erforderlich.

Um diese unterschiedlichen Dosiermengen zu erzielen und trotzdem auf ein möglichst einheitliches Dosiersystem zurückgreifen zu können, ist die erfindungsgemäße Anordnung dahingehend ausgestaltet, daß die eingangsseitige Durchflußöffnung in einem mit dem Gehäuse der Dosierkammer-Ausgabeeinrichtung lösbar verbundenen Dosierkammer-Kappe mit ein Innenvolumen umgrenzenden Seitenwandungen liegt. Ohne daß der Hubbereich des Steuerschiebers verändert zu werden braucht, ist durch entsprechend ausladende bzw. einengende Ausgestaltungen dieser Seitenwandbereiche das Innenvolumen der gesamten Dosierkammer-Ausgabeeinheit entsprechend dem verwendeten Konzentrat variabel anpaßbar.

Nach einer weiteren bevorzugten Ausgestaltung sind längsgerichtete Führungsrippen zwischen dem Außenmantel des rohrförmig ausgebildeten Steuerschiebers und der zylindrischen Wandung der Dosierkammer-Ausgabeeinrichtung angeordnet. Damit kann, ohne daß die Gefahr für eine Verkantung des Steuerschiebers innerhalb des Dosierkammergehäuses gegeben ist, der Spalt zwischen dem Steuerschieber und der Wandung des Dosierkammergehäuses genügend groß ausgebildet werden und damit die Reibung zwischen diesem Steuerschieber und dem Dosierkammergehäuse herabgemindert werden. Herstellungstechnisch bedingt ist es vorteilhaft, daß die längsgerichteten Führungsrippen am Außenmantel des rohrförmig ausgebildeten Steuerschiebers angeordnet sind.

Ist diese Gehäusekappe der Dosierkammer-Ausgabevorrichtung baulich in den Anschlußstutzen des Flüssigkeitsbehälters integriert, so wird eine unmittelbare Beziehung zwischen der Art des Getränkekonzentrats und der Dosiermenge erreicht.

Um zum einen eine gute Möglichkeit zu bieten, die Volumendosierung durch die Dosierkammer-Ausgabeeinrichtung abhängig von der Beschaffenheit der im Vorratsbehälter bevorrateten Flüssigkeit durchführen zu können und zum anderen Schutz gegen mißbräuchliche Verwandung der Vorratsbehälter zu erhalten ist es zweckmäßig, einen Teil der Dosierkammer-Ausgabeeinrichtung, nämlich den Bereich der eingangsseitigen, durch den Steuerkolben verschließbaren Durchflußöffnung, in den Anschlußstutzen des Vorratsbehälters zu integrieren. Dieser Bereich wird derart ausgestaltet, daß er nach einmaliger Verbindung mit den Hauptteilen der Dosierkammer-Ausgabeeinrichtung unbrauchbar wird. Vor dem Anschluß dieser Dosierkammer-Teile ist die Ausgabeöffnung des Anschlußstutzens durch einen Foliendeckel fest verschlossen.

Einzelheiten der erfindungsgemäßen Anordnung sind anhand eines in der Zeichnung dargestellten Ausführungsbeispiels im folgenden näher beschrieben. Es zeigen:

Fig. 1 eine Schrägansicht eines Getränkeautomaten mit Vorratsbehältern für Getränkekonzentrate,
Fig. 2 und Fig. 3 Schrägansichten von Flüssigkeits-Vorratsbehältern ohne und mit einer Dosierkammer-Ausgabeeinrichtung
Fig. 4 eine Ansicht eines Vorratsbehälters für Getränkekonzentrate mit einer Dosierkammer-Ausgabeeinheit
Fig. 5 und Fig. 6 unterschiedliche Ausgestaltungen von eingangsseitigen Gehäusekappen für Dosierkammer-Ausgabeeinheiten.

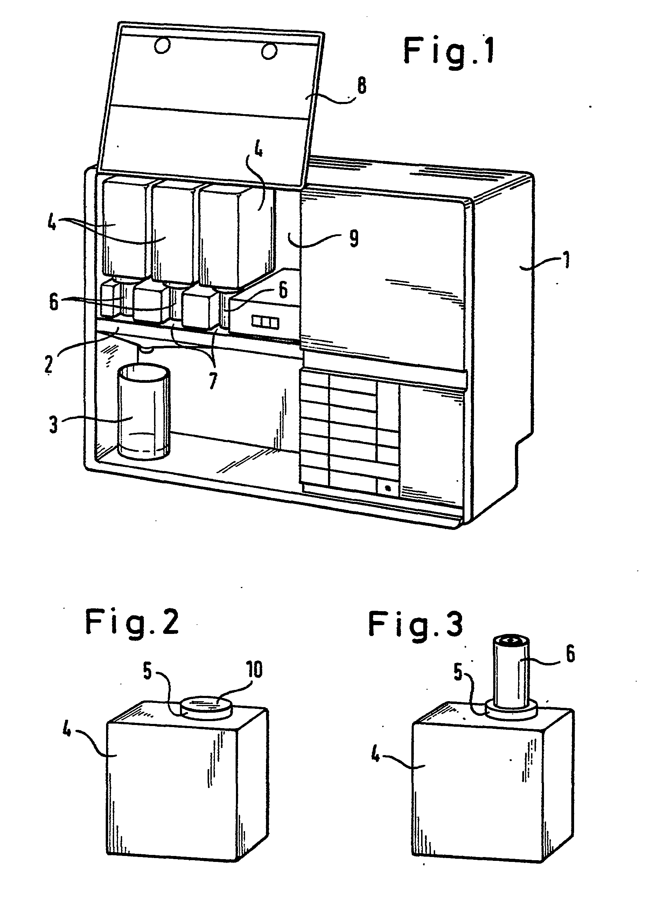

Der in Fig. 1 dargestellte Getränkeautomat dient dazu, innerhalb des Gerätegehäuses 1 mit $CO_2$-Gas

angereichertes und gekühlt bereitgehaltenes Wasser mit einem Getränkekonzentrat innerhalb einer Mischrinne 2 zu vermischen und das dabei entstandene Erfrischungsgetränk in ein Trinkgefäß 3 auszugeben. Um zu ermöglichen daß verschiedene Arten von Erfrischungsgetränken hergestellt werden können, sind im vorliegenden Fall drei Arten von Getränkekonzentraten in drei Vorratsbehältern 4 in den Getränkeautomaten oberhalb der Mischrinne 2 eingesetzt und zwar derart, daß deren Ausgabeöffnungen nach unten gerichtet sind. Jedem dieser Vorratsbehälter 4 ist an einem Anschlußstutzen 5 der Ausgabeöffnung eine Dosierkammer-Ausgabeeinrichrung 6 zugeordnet. Diese Dosierkammer-Ausgabeeinrichtung enthält einen Steuerschieber, welcher mit einem ferromagnetischen Anker ausgestattet ist. Im Gehäuse 1 sind Elektromagneten angeordnet, welche im Bereich der Aufnahmespalte 7 für die Dosierkammer-Ausgabeeinrichtungen 6 ein Magnetfeld erzeugen können, wodurch der Steuerschieber innerhalb der Dosierkammer-Ausgabeeinrichtung 6 beeinflußt wird. Dadurch wird eine dosierte Portion von Getränkekonzentrat der Mischrinne 2 zugeführt, in welcher der Mischvorgang mit ebenfalls in die Mischrinne 2 dosiert zugeführtes karbonisiertes Wasser durchgeführt wird. Die mit einer Klappe 8 abdeckbare Gehäusekammer 9, in welcher die Vorratsbehälter 4 untergebracht sind, ist an den Kältekreislauf einer Kühleinrichtung angeschlossen, damit die Getränkekonzentrate gekühlt bevorratet sind und so für das Mischgetränk zur Verfügung stehen.

Die Fig. 2 zeigt einen Vorratsbehälter 4 für Konzentratsflüssigkeiten, wie er vom Abfüller bis zum Anwender geliefert wird. Die innerhalb des Anschlußstutzens 5 liegende Ausgabeöffnung ist durch einen Foliendeckel 10 verschlossen. Die Fig. 3 zeigt einen Vorratsbehälter 4 für ein Getränkekonzentrat mit auf den Anschlußstutzen 5 aufgesetzter Dosierkammer-Ausgabeeinrichtung 6.

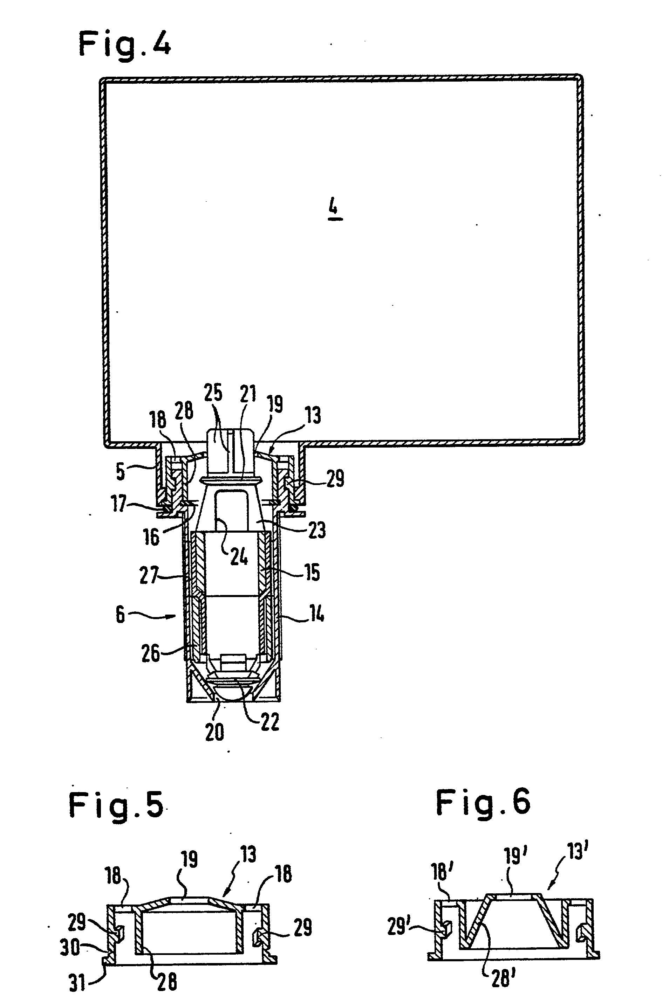

Der Vorratsbehälters 4 und Einzelheiten der Dosierkammer-Ausgabeeinrichtung 6 für Getränkekonzentrate sind aus der Schnittdarstellung gemäß Fig. 4 erkenntlich. Der Vorratsbehälter 4 ist im wesentlichen formstabil quaderförmig ausgestaltet. im Bereich seiner Ausgabeöffnung geht die Behälterwandung in den formstabilen Anschlußstutzen 5 über, an den die Dosierkammer-Ausgabeeinheit 6 befestigt ist.

Die Dosierkammer-Ausgabeeinheit 6 wird gebildet durch ein eingangsseitig durch eine Gehäusekappe 13 erweitertes Dosierkammer-Gehäuse 14, in welchem ein rohrförmig ausgebildeter Steuerschieber 15 höhenverschieblich angeordnet ist.

Die Gehäusekappe 13 ist aufbautechnisch integrierter Bestandteil des Anschlußstutzens 5 des Vorratsbehälters 4. Das Dosierkammer-Gehäuse 14 ist über kurze auf dem Umfang verteilte Schraubengänge 29 mit der Gehäusekappe 13 verbunden und über eine Dichtungsscheibe 16 gegenüber dieser Gehäusekappe 13 abgedichtet. Der Dichtring 17 ist zur Abdichtung nach außen vorgesehen, da aus fertigungstechnischen Gründen bei der Herstellung der Schraubengänge 25 in der oberen Abschlußwandung der Gehäusekappe 13 Durchbrüche 18 vorgesehen sind.

in der im wesentlichen rotationssymmetrisch ausgestalteten Dosierkammer-Ausgabeeinrichtung 6 sind achszentral in der Gehäusekappe 13 die eingangsseitige Durchflußöffnung 19 und am unteren Ende des Dosierkammer-Gehäuses 14 die ausgangsseitige Durchflußöffnung 20 angeordnet. Gegenüber diesen Durchflußöffnungen 19, 20 sind auf dem Steuerschieber 15 Ventilverschlußscheiben 21, 22 getragen, welche je nach Höhenendlage des Steuerschiebers 14 die eingangsseitige Durchflußöffnung 19 oder – wie in der Fig. 4 dargestellt – die ausgangsseitige Durchflußöffnung 20 alternierend verschließen. Der Steuerschieber 15 ist im wesentlichen rohrförmig ausgebildet und trägt zur eingangsseitigen Ventilverschlußscheibe 21 in einen zylindrischen Aufsatz 23 mit Durchbrüchen 24. Oberhalb dieser Ventilverschlußscheibe 21 ragen kreuzförmig ausgestaltete Führungsrippen 25 in die eingangsseitige Durchflußöffnung 19 als Führungselemente hinein. Der Steuerschieber 15 ist mit einem Ring 26 aus ferromagnetischem Material ausgestattet, der als Tauchanker innerhalb eines im Gerätegehäuse 1 untergebrachten Elektromagnetsystems durch Erregung eines magnetischen Feldes dahingehend beeinflußt wird, daß der Steuerschieber 13 aus der dargestellten Lage, bei der die ausgangsseitige Durchflußöffnung 20 verschlossen ist, in die obere Lage gehoben wird, in der die eingangsseitige Durchflußöffnung 19 verschlossen ist. Auf dem Mantelumfang des Steuerschiebers 15 sind längsverlaufende Führungsrippen 27 angeordnet, so daß gute Gleiteigenschaften zwischen dem Steuerschieber 15 und der Wandung des Dosierkammer-Gehäuses 14 gegeben sind.

in der in der Fig. 4 dargestellten Lage des Steuerschiebers 15 kann im Vorratsbehälter 4 vorhandenes Getränkekonzentrat in den Innenraum der Dosierkammer-Ausgabeeinrichtung 6 durch deren eingangsseitige Durchflußöffnung 19 infolge eigener Schwerkraft einfließen. Das in der Dosierkammer-Ausgabeeinrichtung 6 vorhandene Luftvolumen strömt in den Vorratsbehälter 4. Durch die Tatsache, daß diese zuströmende Luft ursprünglich wärmer ist als das normalerweise gekühlt ausgegebene Getränkekonzentrat, ist nach Abkühlung dieser Luft ein Volumendefizit gegeben, das sich aber bei Verwendung der erfindungsgemäß gestalteten Dosierkammer-Ausgabeeinrichtung 6 sich nicht nachteilig auf die Dosiergenauigkeit auswirkt. Durch intermittierende Kühlvorgänge hervorgerufene Temperaturunterschiede und damit Volumenveränderungen innerhalb des Vorratsbehälters 4 wirken sich ebenfalls nicht nachteilig aus.

Durch die Erzeugung eines Magnetfelds durch ein im Gerätegehäuse 1 angeordnetes Elektromagnetsytem wird auf den ferromagnetischen Ring 26 des Steuerschiebers 15 eine Hubkraft ausgeübt. Infolgedessen wird die eingangsseitige Durchflußöffnung 19 durch die Ventilverschlußscheibe 21 verschlossen, so daß kein Getränkekonzentrat mehr aus dem Vorratsbehälter 4 in die Dosierkammer-Ausgabeeinrichtung 6 gelangen kann, während die ausgangsseitige Durchflußöffnung 20 geöffnet wird und die ursprünglich in der Dosierkammer-Ausgabeeinrichtung 6 vorhandene Menge an Getränkekonzentrat austreten kann. Das ausströmende Volumen wird wiederum innerhalb der Dosierkammer-Ausgabevorrichtung 6 durch Luft ersetzt. Durch diese Dosierkammer-Ausgabevorrichtung ist eine hohe Genauigkeit des Ausgabevolumens gegeben. Diese Genauigkeit ist zur Erzielung eines optimalen Mischungsverhältnisses mit dem ebenfalls dosiert in die Mischrinne 2 eingeführten karbonisierten Wasser von größter Bedeutung.

Unterschiedliche Getränkekonzentrate erfordern unterschiedliche Dosierungsmengen. Um mit einer bezüglich der wesentlichen Aufbauteile einheitlichen Dosierkammer-Ausgabeeinrichtung dieser Forderung gerecht zu werden, reduziert sich der Aufwand für die Variantenbildung auf die unterschiedliche Ausgestaltung der Seitenwandungen 28 der Gehäusekappe 13. In Fig. 5 ist die gleiche Gehäusekappe 13 dargestellt, wie sie auch in Fig. 4 zu sehen ist. Demgegenüber zeigt Fig. 6 eine Gehäusekappe 13' mit abgeschrägten Wandungen 28', welche konisch zur Durchflußöffnung 19' zusammenlaufen. Dadurch ist gegenüber der Verwendung einer Gehäusekappe 13 nach Fig. 5 bei einer Ausgestaltung der Gehäusekappe 13' nach Fig. 6 eine Volumenveränderung in diesem Bereich und damit für die gesamte Dosierkammer-Ausgabeeinrichtung 6 gegeben. Da diese Gehäusekappen 13 bzw 13' in den Anschlußstutzen 5 des Behälters 4 integriert eingebaut sind, ist ein unmittelbarer Bezug zur Beschaffenheit des verwendeten Getränkekonzentrats gegeben. Eine weitere Volumenreduzierung in der Dosierkammer-Ausgabeeinrichtung 6 ist durch Einfügung eines zusätzlichen Rohreinsatzes in den Steuerkolben 15 möglich.

Sollbruchstellen 30 dienen dazu, daß nach dem Entfernen des Dosierkammergehäuses 14 aus der Gehäusekappe diese von ihrem Flansch abgetrennt wird und somit für eine weitere Verbindung nicht mehr funktionstüchtig ist.

**Patentansprüche**

11. Dosierkammer-Ausgabeeinrichtung (6) zur dosierten Abgabe von Flüssigkeiten, insbesondere von Getränkekonzentraten, aus einem Vorratsbehälter (4) unter Verwendung eines an der Austrittsöffnung des Vorratsbehälters (4) lösbar befestigten Dosierventils mit einer dessen Zuflußöffnung (19) und Austrittsöffnung (20) alternierend verschließenden bzw. öffnenden Steuerschieberanordnung (15), die aus einer ersten Lage, bei der die Austrittsöffnung (20) verschlossen ist, in eine zweite Lage, bei der die Zuflußöffnung (19) verschlossen ist, verstellbar ist, wobei die eingangsseitige Zuflußöffnung (19) in die Dosierkammer-Ausgabeeinrichtung (6) zentral im Kopfbereich dieser Dosierkammer-Ausgabeeinrichtung (6) angeordnet ist und gegenüber dieser Zuflußöffnung (19) direkt auf dem rohrförmig ausgebildeten Steuerschieber (15) ein Ventilverschlußorgan (21) angeordnet ist, über das die Zuflußöffnung (19) in Bewegungsrichtung des Steuerschiebers (15) gegenüber dem gesamten Innenraum des Dosierkammergehäuses (14) deckelartig verschließbar ist und auf dem Steuerschieber (15) oberhalb des Ventilverschlußorgans (21) in die eingangsseitige Durchflußöffnung (19) der Dosierkammer-Ausgabeeinrichtung (6) hineinragende Führungsrippen (25) angeordnet sind, dadurch gekennzeichnet, daß der Steuerschieber (15) mit einem ferromagnetischen Anker (26) ausgestattet und somit durch ein durch einen Elektromagneten erzeugtes Magnetfeld entgegen der Schwerkraft betätigbar ist, und daß die eingangsseitige Zuflußöffnung (19) in einer mit dem Gehäuse (14) der Dosierkammer-Ausgabevorrichtung (6) lösbar verbundenen Gehäusekappe (13, 13') mit ein Innenvolumen umgrenzenden Seitenwandungen (28, 28') liegt.

2. Anordnung nach Anspruch 1, dadurch gekennzeichnet, daß längsgerichtete Führungsrippen (27) zwischen dem Außenmantel des rohrförmig ausgebildeten Steuerschiebers (15) und der zylindrischen Wandung (14) der Dosierkammer-Ausgabevorrichtung (6) angeordnet sind.

3. Anordnung nach Anspruch 2, dadurch gekennzeichnet, daß die längsgerichteten Führungsrippen (27) am Außenmantel des rohrförmig ausgebildeten Steuerschiebers (15) angeordnet sind.

4. Anordnung nach einem der Ansprüche 1 bis 3, dadurch gekennzeichnet, daß die Gehäusekappe (13, 13') der Dosierkammer-Ausgabeeinrichtung (6) Bestandteil des Flüssigkeitsbehälters (4) ist.

5. Anordnung nach einem der Ansprüche 1 bis 4, dadurch gekennzeichnet, daß die Wandungen (28, 28') der Gehäusekappe (13, 13') in Abhängigkeit des zu dosierenden Volumens der Flüssigkeit ausgestaltet sind.

6. Anordnung nach Anspruch 4, dadurch gekennzeichnet, daß die Gehäusekappen Bruchstellen (30) aufweisen, die eine Trennung der Gehäusekappe vom Gehäusekappenflansch (31) nach dem erstmaligen Entfernen des Dosiergehäuses (14) aus der Ausgabeöffnung des Vorsatzbehälters (4) bewirken.

**Revendications**

1. Distributeur de liquide (6) avec chambre de dosage, pour délivrer de façon dosée des liquides, en particulier des concentrés de boisson, à partir d'un réservoir (4), en utilisant une soupape de dosage qui est fixée de manière démontable à l'ouverture de sortie du réservoir (4) et qui comprend un dispositif à tiroir de commande, ouvrant et fermant alternativement l'ouverture d'admission (19) et l'ouverture de sortie (20) de la soupape, et manœuvrable à partir d'une première position, dans laquelle l'ouverture de sortie (20) est fermée, en une deuxième position, dans laquelle l'ouverture d'admission (19) située du côté de l'entrée est fermée, l'ouverture d'admission (19) située dans le distributeur (6) à chambre de dosage, côté entrée, étant disposée centralement, dans la zone de tête de ce distributeur (6) à chambre de dosage et un organe d'obturation à soupape (21) étant disposé en face de cette ouverture d'admission (19), directement sur le tiroir de commande (15) de forme tubulaire, organe (21) par l'intermédiaire duquel l'ouverture d'admission (19) est susceptible d'être obturée à la manière d'un couvercle dans le sens de déplacement du tiroir (15) par rapport à l'ensemble de l'espace intérieur du carter (14) de chambre de dosage, et des nervures de guidage (25), pénétrant dans l'ouverture de passage (19) côté entrée du distributeur (6) à chambre de dosage, étant disposées sur le tiroir de commande (15), au-dessus de l'organe d'obturation de soupape (21), caractérisé en ce que le tiroir de commande (15) est muni d'un induit (26) ferromagnétique et est ainsi susceptible d'être actionné à l'encontre de la gravité, au moyen d'un champ magnétique produit par un électro-aimant, et que l'ouverture d'admission (19) située côté entrée est placée dans un capot de carter (13, 13') relié de manière démontable au carter (14) du distributeur (6) à chambre de dosage et présentant des parois latérales (28, 28') délimitant un volume intérieur.

2. Distributeur selon la revendication 1, caractérisé en ce que des nervures de guidage (27) longitudinales sont disposées entre l'enveloppe extérieure du tiroir de commande (15) et la paroi cylindrique (14) du distributeur (6) à chambre de dosage.

3. Distributeur selon la revendication 2, caractérisé en ce que les nervures de guidage (27) longitudinales sont disposées sur l'enveloppe extérieure du tiroir de commande (15) tubulaire.

4. Distributeur selon l'une des revendications 1 à 3, caractérisé en ce que le capot de carter (13, 13') du distributeur (6) à chambre de dosage fait partie du réservoir de liquide (4).

5. Distributeur selon l'une des revendications 1 à 4, caractérisé en ce que les parois (28, 28') du capot de carter (13, 13') sont configurées en fonction du volume de liquide à doser.

6. Distributeur selon la revendication 4, caractérisé en ce que le capot de carter présente des emplacements de rupture (30) qui provoquent une séparation entre le capot de carter et le rebord (31) du capot de carter, après le première enlèvement du carter de dosage (14) hors de l'ouverture de distribution du réservoir (4).

## Claims

1. Metering chamber delivery equipment (6) for the metered delivery of liquids, in particular of beverage concentrates, from a stock container (4) with the use of a metering valve, which is detachably fastened at the exit opening of the stock container (4), with a control slide arrangement (15), which alternatingly closes or opens the inflow opening (19) and the exit opening (20) of the metering valve and which is resettable out of a first position, in which the exit opening (20) is closed, into a second position, in which the inflow opening (19) is closed, wherein the inflow opening (19) at the entry into the metering chamber delivery equipment (6) is arranged centrally in the head region of this metering chamber delivery equipment (6) and a valve closure organ (21), by way of which the inflow opening (19) is closable in the manner of a lid against the entire interior space of the metering chamber housing (14), is arranged opposite this inflow opening (19) and directly on the tubularly constructed control slide (15) and guide ribs (25), which project into the inflow opening (19) at the entry into the metering chamber delivery equipment (6), are arranged above the valve closure organ (21) on the control slide (15), characterised thereby, that the control slide (15) is equipped with a ferromagnetic armature (26) and thereby actuable against gravity by a magnetic field produced by an electromagnet and that the inflow opening (19) lies in a housing cap (13, 13'), which is detachably connected with the housing (14) of the metering chamber delivery equipment (6), with side walls (28, 28') bounding an internal volume.

2. Arrangement according to claim 1, characterised thereby, that longitudinally oriented guide ribs (27) are arranged between the outer shell of the tubularly constructed control slide (15) and the cylindrical wall (14) of the metering chamber delivery equipment (6).

3. Arrangement according to claim 2, characterised thereby, that the longitudinally oriented guide ribs (27) are arranged at the outer shell of the tubularly constructed control slide (15).

4. Arrangement according to one of the claims 1 to 3, characterised thereby, that the housing cap (13, 13') of the metering chamber delivery equipment (6) is component of the liquid container (4).

5. Arrangement according to one of the claims 1 to 4, characterised thereby, that the walls (28, 28') of the housing cap (13, 13') are structured in dependence on the volume to be metered of the liquid.

6. Arrangement according to claim 4, characterised thereby, that the housing caps display frangible places (30), which effect a separation of the housing cap from the housing cap flange (31) after the first time removal of the metering housing (14) from the delivery opening of the stock container (4).

Fig.1

Fig.2

Fig.3

# Fig.4

# Fig.5

# Fig.6